# EUROPÄISCHE PATENTSCHRIFT

(11) **EP 2 543 642 B1**
(45) Veröffentlichungstag und Bekanntmachung des Hinweises auf die Patenterteilung: **26.03.2014**
(21) Anmeldenummer: 12004511.7
(22) Anmeldetag: 15.06.2012
(51) Int. Cl.: C02F 11/12, C02F 11/14, B01F 5/04

(54) **Verfahren zur Behandlung von Klärschlamm**
Method for treating sewage sludge
Procédé de traitement de boues d'épuration

(30) Priorität: 04.07.2011 DE 102011106387
(43) Veröffentlichungstag der Anmeldung: 09.01.2013
(73) Patentinhaber: Reiflock Abwassertechnik GmbH, 76532 Baden-Baden (DE)
(72) Erfinder:
(74) Vertreter: Jany und Petersen

(56) Entgegenhaltungen:
- WO-A1-00/02653
- JP-A- 2004 036 904
- US-A- 5 037 561

## Beschreibung

Die Erfindung betrifft ein Verfahren für die Entwässerung von Schlamm, mit dem Schritt, den Schlamm durch ein Entwässerungsaggregat zu führen.

In kommunalen und industriellen Kläranlagen werden Klärschlämme zum Zwecke einer Volumen- und Gewichtsreduzierung entwässert. Hierzu sind verschiedenste Vorrichtung wie beispielsweise Zentrifugen, Kammerfilterpressen oder auch Siebbandpressen als mechanische Vorrichtungen bekannt.

Bei einer Vorrichtung gemäß der US 5 037 561 A wird Klärschlamm in einem Wirbelschichtverfahren getrocknet und verbrannt.

Je höher die Entwässerungsrate ist, desto mehr Energie muss in die Anlage eingebracht werden, um sich verbessernde Ergebnisse zu erzielen. Es ist dabei bekannt, dass der Aufwand im Verhältnis zu weiterem Nutzen exponentiell ansteigt.

Dennoch ist man bemüht, die Entwässerungsleistung weiter zu verbessern. Hierin ist die Aufgabe der vorliegenden Erfindung zu sehen.

Überraschenderweise hat sich gezeigt, dass eine Verbesserung in der Entwässerungsleistung eines Entwässerungsaggregates zu erreichen ist, wenn zuvor der pumpfähige Schlamm erfindungsgemäß mit Dampf vermischt wird, der auf eine Geschwindigkeit beschleunigt wurde, die über seiner Schallgeschwindigkeit liegt, wobei dann in dem sich ergebenden Gemisch aus Dampf und Schlamm in einem Verdichtungsstoß der Dampf kondensiert wird, so dass das Gemisch auf eine Geschwindigkeit gebremst wird, die unterhalb der Schallgeschwindigkeit des Gemisches liegt. - Im Rahmen der hier vorliegenden Erfindung wird dabei unter Dampf insbesondere durch Erhitzen in seinem gasförmigen Aggregatzustand befindliches Wasser verstanden.

Wenn ein entsprechend behandelter Schlamm anschließend über ein Entwässerungsaggregat geführt wird, wird eine erheblich höhere Entwässerungsleistung erzielt und damit ein deutlich höherer Trockengehalt.

Dies ist unter dem Aspekt überraschend, dass bei der beschriebenen Behandlung mit Dampf eigentlich davon ausgegangen werden kann, dass die einzelnen Teilchen im Schlamm voneinander getrennt werden und man so anschließend insgesamt sehr kleine und fein verteilte Partikel vorliegen hat. Ein Schlamm mit solchen Partikeln ist normalerweise schlecht zu entwässern.

Die beim erfindungsgemäßen Verfahren zugrunde liegenden Phänomene, die dennoch zu der überraschend guten Entwässerung führen, sind nicht detailliert bekannt. Es wird angenommen, dass durch den genannten Verdichtungsstoß im Schlamm vorhandene Wasser-Cluster aufgebrochen werden, so dass anschließend eine erheblich bessere Entwässerungsleistung bzw. fest-flüssig-Trennung zu erreichen ist.

Bei einer besonders bevorzugten Ausführungsform des Verfahrens wird dem Dampf, der vor seiner Beschleunigung auf die Überschallgeschwindigkeit einen Druck von 0,1 bar bis 5 bar, insbesondere von 3 bar hat und eine Temperatur von 100 °C bis 160 °C vorzugsweise von 140 °C, Schlamm zugemischt, der eine Temperatur in dem Bereich von 10 °C bis 50 °C hat, insbesondere von 37 °C.

Das Verhältnis von Masse an Dampf zu Masse an Schlamm sollte dabei vorzugsweise im Bereich von 0,1:100 bis 20:100, insbesondere von 2:100 liegen.

Es ist dabei im Rahmen der Erfindung, wenn in einem weiteren Schritt vor der Entwässerung des behandelten Schlamms im Entwässerungsaggregat dem Schlamm noch ein Flockungshilfsmittel zugesetzt wird.

Es hat sich dabei herausgestellt, dass hierfür erheblich geringere Mengen an Flockungshilfsmitteln notwendig sind, als bei Entwässerungsaggregaten, bei denen der Schlamm nicht nach dem erfindungsgemäßen Verfahren behandelt wird. Dies wird darauf zurückgeführt, dass bei der oben beschriebenen Trennung von einzelnen Teilchen diese insbesondere negativ geladen werden.

Als Flockungshilfsmittel sind insbesondere Polymere bekannt, die eine besonders gute Ausflockungsfähigkeit besitzen, gerade wenn es sich um kationische Polymere handelt, die im vorliegenden Fall besonders gut mit den angesprochenen negativ geladenen Teilchen reagieren.

Bei einer besonders bevorzugten Ausführungsform wird für das erfindungsgemäß abschließend zu verwendende Entwässerungsaggregat eine Zentrifuge vorgeschlagen.

Im Übrigen sind selbstverständlich auch andere Entwässerungsaggregate wie beispielsweise Kammerfilterpressen oder Siebbandpressen oder eine Winkelpresse etc. verwendbar. Außerdem sind unter entsprechenden Entwässerungsaggregaten erfindungsgemäß auch Filteraggregate wie beispielsweise Scheiben- oder Trommelfilter, etc. zu verstehen, damit denen auf ähnliche Weise eine fest-flüssig-Trennung erreichbar ist.

Weitere Vorteile und Merkmale der Erfindung ergeben sich aus der nachfolgenden Beschreibung eines Ausführungsbeispiels. Dabei zeigt
- Figur 1: die Prinzipskizze einer Vorrichtung zum Behandeln von Schlamm, beispielsweise in einer Kläranlage;
- Figur 2: ein Entwässerungsaggregat, das der Vorrichtung gemäß Figur 1 nachgeschaltet ist.

Im Zuge des bekannten Klärverfahrens entstehen auf kommunalen oder industriellen Kläranlagen Schlämme, die zur Weiterverarbeitung/Entsorgung entwässert werden müssen. Anhand der beigefügten Zeichnungen wird ein entsprechendes Verfahren beschrieben.

Der Schlamm wird mit einer Schlammpumpe 1 durch eine Leitung 2 zu einer Düsenvorrichtung 3 gepumpt. Die Schlammpumpe 1 wird dabei durch einen Motor 4 angetrieben, der durch eine entsprechende Elektronik 5 geregelt wird. Die Menge des Schlamms wird durch eine Durchflussmengenmessvorrichtung 6 ermittelt, wobei dabei ermittelte Daten über ein Koppelelement 7 an eine (nicht dargestellte) Steuerung geliefert werden.

Außerdem wird in der Leitung 2 noch mit einer Temperaturmessvorrichtung 8 die Temperatur des gepumpten Schlammes ermittelt und durch eine Rückschlagklappe 9 sichergestellt, dass der Schlamm nur in eine Richtung durch die Leitung 2 fließt.

Der Düsenvorrichtung 3 wird aus einer vorhandenen (nicht näher dargestellten) Dampfversorgung über eine Dampfleitung 10 Wasserdampf zugeführt, wobei über entsprechende Messelemente 11, 12 der Druck und die Temperatur dieses Dampfes ermittelt werden. Die Menge des durch die Leitung 10 fließenden Dampfes wird über ein Dampfregelventil 13 bestimmt.

Dieser Dampf, wie er üblicherweise in Kläranlagen standardmäßig vorgehalten wird, wird über die Dampfleitung 10 in die Düsenvorrichtung 3 mit einem Druck zwischen 0,1 bar und 5 bar, insbesondere mit etwa 3 bar und einer Temperatur von 100 °C - 160 °C, vorzugsweise etwa 140 °C eingebracht.

Innerhalb der Düsenvorrichtung 3 wird der Dampf zunächst auf eine Geschwindigkeit beschleunigt, die über seiner Schallgeschwindigkeit liegt. Dies erfolgt üblicherweise durch eine Lavaldüse. Der derart mit Überschallgeschwindigkeit strömende Dampf wird mit dem pumpfähigen Schlamm vermischt, der aus der Leitung 2 zugeführt wird.

Dieser Schlamm kann dabei eine Temperatur zwischen 10 und 50 °C haben und hat insbesondere eine Temperatur, die in dem Bereich von ca. 37 °C liegt. Das Verhältnis von Masse an Dampf zu Masse an zugeführtem Schlamm liegt dabei beispielsweise in einem Bereich von 2:100.

Dieses Gemisch wird dann einem Verdichtungsstoß unterzogen, wobei der Dampf kondensiert und das Gemisch auf eine Geschwindigkeit gebremst wird, die unterhalb der Schallgeschwindigkeit des Gemisches liegt.

Es ist dabei davon auszugehen, dass es zwischen dem strömenden Dampf und dem zugeführten Schlamm einen hohen Geschwindigkeitsunterschied gibt, wobei der Dampf wie gesagt Überschallgeschwindigkeit hat und der pumpfähige Schlamm beim Zumischen in der Düsenvorrichtung 3 eine demgegenüber vernachlässigbare Geschwindigkeit aufweist. Außerdem ist zu berücksichtigen, dass sich die Schallgeschwindigkeit eines Zwei-Phasengemisches - wie es bei dem Dampf-Schlamm-Gemisch vorliegt - über dessen prozentuale Zusammensetzung verändert, aber nicht linear. Das heißt, die Schallgeschwindigkeit ist bei 100 % Dampf anders als bei 100 % flüssigem Schlamm und ändert sich in Abhängigkeit des Verhältnisses von Dampf zu flüssigem Schlamm. Dabei ist die Schallgeschwindigkeit sowohl bei 100 % Dampf als auch bei 100 % flüssigen Schlamm höher als bei Vorliegen eines Gemisches. Damit strömt letztlich sowohl der für das Mischen zugeführte Dampf mit einer Geschwindigkeit, die größer ist als die (für Dampf spezifische) Schallgeschwindigkeit, als auch das entstehende Gemisch, dessen Geschwindigkeit ebenfalls höher ist als die (für das Gemisch spezifische) Schallgeschwindigkeit. Obwohl also die absolute Geschwindigkeit des Gemisches erheblich niedriger ist als die absolute Geschwindigkeit des Dampfes, strömen beide erfindungsgemäß jeweils mit (allerdings spezifischen, unterschiedlichen) Überschallgeschwindigkeiten.

Durch die anschließende Kondensation des Dampfes innerhalb der Zwei-Pha-sen-Strömung in einem Verdichtungsstoß wird Kondensationswärme freigesetzt, die zu einer Erwärmung der Schlammanteile beiträgt. - Nur am Rande sei hier erwähnt, dass bei der genannten Kondensation das als Dampf vorliegende Wasser seinen Aggregatzustand ändert und anschließend wieder flüssig vorliegt.

Es ergibt sich aufgrund des in dem Verdichtungsstoß lokal eng begrenzten Überganges von der Überschallströmung auf die Unterschallströmung bei gleichzeitigem Übergang von einer Zwei-Phasen-Strömung zu einer Ein-Phasen-Strömung an dieser Stelle kontinuierlich eine erhebliche lokale Druckerhöhung. Hierdurch wird auf die einzelnen Bestandteile des Schlamms, d. h. sowohl auf die in diesem vorhandene Flüssigkeit (insbesondere ist dies wohl Wasser) als auch auf die einzelnen Partikel eine hohe Scherkraft ausgeübt.

Die einzelnen Partikel werden dabei aufgebrochen und fein im Schlamm verteilt, wobei sie bei dem Aufbrechen insbesondere negativ geladen werden.

Die Temperatur des die Düsenvorrichtung verlassenden Schlammes wird dabei über eine weitere Temperaturmessvorrichtung 14 ermittelt und dann ggf. einer entsprechenden Steuerung für das Dampfregelventil 13 zugeführt.

In der Düsenvorrichtung wird die Temperatur des Schlammes dabei um ca. 10 - 20 °C angehoben.

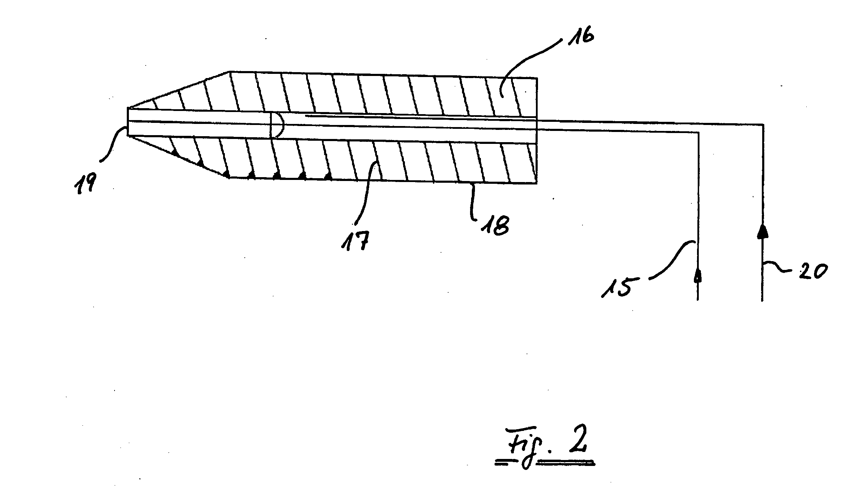

Das derart behandelte Schlammgemisch wird dann über eine Leitung 15 einem Entwässerungsaggregat 16 zugeführt, wie in Figur 2 dargestellt.

In dem hier dargestellten Beispiel handelt es sich dabei um eine Zentrifuge, die das in sie eintretende Schlammgemisch über eine Wendel 17, die an ihrer Außenwandung 18 befestigt ist, in Axialrichtung transportiert und zu einer Auswurföffnung 19 fördert. Dabei wird das aus der Leitung 15 kommende Schlammgemisch mit einer über die Leitung 20 zugeführten Polymerlösung versetzt. Die hier eingesetzten Polymere sind insbesondere kationische Polymere, die bei den oben angesprochenen negativ geladenen Teilchen einen besonders guten Flockungseffekt bewirken.

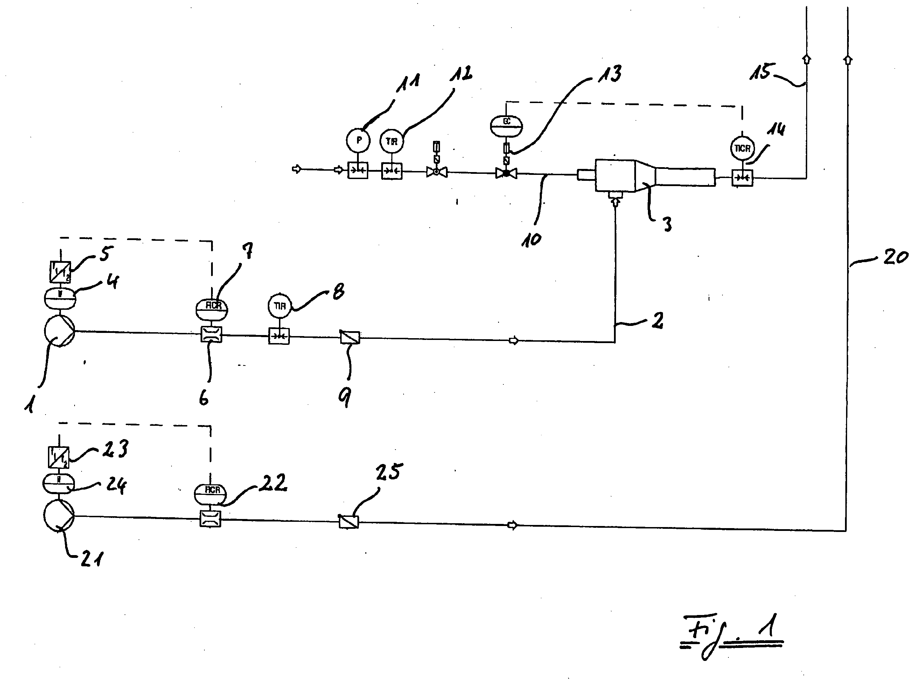

Die genannte Polymerlösung wird, wie in der Figur 1 dargestellt, über eine Polymerdosierpumpe 21 zugeführt. Die zugeführte Menge an Polymer wird durch eine Durchflussmengenmessung 22 erfasst, die auf eine Steuerung 23 für die durch einen Motor 24 angetriebene Polymerdosierpumpe 21 wirkt.

Lediglich der guten Ordnung halber soll erwähnt werden, dass auch in der Leitung 20 eine Rückschlagklappe 25 vorhanden ist, so dass das Polymer nur in einer Richtung durch die Leitung 20 fließen kann.

Der in der Düsenvorrichtung 3 behandelte Schlamm hat schließlich an der Auswurföffnung 19 einen erheblich besseren Trockenanteil als in bisherigen vergleichbaren Anlagen, obwohl durch die Leitung 20 weniger Polymer zugesetzt wird als bisher üblich.

In einem Praxisversuch konnte bei ansonsten gleichen Rahmenbedingungen der Abscheidegrad des Entwässerungsaggregates durch Einsatz der Düsenvorrichtung 3 von 95 % auf 99,5 % erhöht werden, bei einer Erhöhung des TS-Gehaltes um ca. 5 %. Gleichzeitig konnte die Menge an zugesetztem Polymer verringert werden. Weiterhin konnte dabei auch noch die Durchsatzleistung des Entwässerungsaggregates um ca. 50 % erhöht werden.

## Patentansprüche

1. Ein Verfahren für die Entwässerung von Schlamm,
mit dem Schritt, den Schlamm durch ein Entwässerungsaggregat zu führen,
**dadurch gekennzeichnet,**
**dass** der pumpfähige Schlamm zuvor mit Dampf vermischt wird, der auf eine Geschwindigkeit beschleunigt wurde, die über seiner Schallgeschwindigkeit liegt, zur Bildung eines Zwei-Phasen-Gemisches,
und
**dass** dann in dem sich ergebenden Zwei-Phasen-Gemisch in einem Verdichtungsstoß der Dampf kondensiert wird und das Gemisch auf eine Geschwindigkeit gebremst wird, die unterhalb der Schallgeschwindigkeit des Gemisches liegt,
wobei in dem Verdichtungsstoß gleichzeitig ein Übergang von einer Zwei-Phasen-Strömung zu einer Ein-Phasen-Strömung stattfindet.

2. Verfahren gemäß Anspruch 1,
**dadurch gekennzeichnet,**
**dass** in einem weiteren Schritt vor der Entwässerung dem Gemisch ein Flockungshilfsmittel zugesetzt wird.

3. Verfahren gemäß Anspruch, 2,
**dadurch gekennzeichnet,**
**dass** das Flockungshilfsmittel ein Polymer ist.

4. Verfahren gemäß Anspruch 1,
**dadurch gekennzeichnet,**
**dass** das Entwässerungsaggregat eine Zentrifuge ist.

## Claims

1. A method of dewatering sewage sludge including the step of passing the sludge through a dewatering unit, **characterised in that** the pumpable sludge is previously mixed with steam, which has been accelerated to a speed, which is above the speed of sound in it, to form a two-phase mixture, and that the steam is condensed in the resulting two-phase mixture in a compression shock and the mixture is decelerated to a speed, which is below the speed of sound in the mixture, wherein a transition occurs simultaneously in the compression shock from a two-phase flow to a one-phase flow.

2. A method as claimed in Claim 1, **characterised in that** in a further step before the dewatering of the mixture, a flocculation aid is added.

3. A method as claimed in Claim 2, **characterised in that** the flocculation aid is a polymer.

4. A method as claimed in Claim 1, **characterised in that** the dewatering unit is a centrifuge.

## Revendications

1. Procédé de déshydratation de boues,
comprenant l'étape consistant à faire passer la boue à travers une unité de déshydratation,
**caractérisé en ce**
**que** la boue pompable est préalablement mélangée à de la vapeur, qui a été accélérée à une vitesse qui se situe au-dessus de sa vitesse sonique, pour former un mélange à deux phases,
et en ce
**que** dans le mélange à deux phases résultant, la vapeur est ensuite condensée par un choc de compression et le mélange freiné à une vitesse inférieure à la vitesse sonique du mélange,
une transition d'un écoulement à deux phases en un écoulement à une phase ayant lieu simultanément lors du choc de compression.

2. Procédé selon la revendication 1,
**caractérisé en ce**
**que** dans une autre étape précédant la déshydratation, un adjuvant de floculation est ajouté au mélange.

3. Procédé selon la revendication 2,
**caractérisé en ce**
**que** l'adjuvant de floculation est un polymère.

4. Procédé selon la revendication 1,
**caractérisé en ce**
**que** l'unité de déshydratation est une centrifugeuse.
